# EUROPÄISCHE PATENTANMELDUNG

(11) **EP 1 191 720 A2**
(43) Veröffentlichungstag der Anmeldung: **27.03.2002**
(21) Anmeldenummer: 01250294.4
(22) Anmeldetag: 15.08.2001
(51) Int. Cl.: H04H 1/00

(54) **Kombiniertes Netzsystem und Verfahren zur Bereitstellung individualisierter information aus einer Gesamtheit von Informationen**

(30) Priorität: 26.09.2000 DE 10047596; 26.03.2001 DE 10115746
(71) Anmelder: SIEMENS AKTIENGESELLSCHAFT, 80333 München (DE)
(72) Erfinder: Gero, Baese, 81371 Muenchen (DE); Fischer, Andre, 10965 Berlin (DE); Gebler, Martin, 82049 Pulach im Isartal (DE); Moritz, Peter, 85540 Haar (DE); Markgraf, Sabine, 82131 Gauting (DE); Prange, Stefan, Dr., 81476 Muenchen (DE); Schlossnikel, Annette, 81245 Muenchen (DE); Sibila, Arnd, 82272 Moorenweis (DE); Strobel, Thomas, 82131 Gauting (DE); Von Brockdorff, Christian, 82131 Gauting (DE); Wilde, Juergen, 82024 Taufkirchen (DE)

(57) **Zusammenfassung**

Die Erfindung betrifft ein kombiniertes Netzsystem zur Bereitstellung individualisierter Information aus einer Gesamtheit von Informationen für mindestens einen Teilnehmer (3) des Netzsystems durch eine zentrale Einheit (1) des Netzsystems, wobei das Netzsystem mindestens ein Broadcastsystem (2) zur Übertragung der Gesamtheit von Informationen und mindestens ein Mobilkommunikationssystem (6) zur Übertragung individualisierter Information an den mindestens einen Teilnehmer (3) und zur Interaktion des mindestens einen Teilnehmers (3) des Netzsystems mit der zentralen Einheit (1) des Netzsystems aufweist.

Ferner betrifft die Erfindung ein Verfahren zur Bereitstellung individualisierter Information aus einer Gesamtheit von Informationen für mindestens einen Teilnehmer (3) eines Netzsystems durch eine zentrale Einheit (1) des Netzsystems, wobei das Verfahren mindestens die folgenden Schritte aufweist:
a. Bereitstellen einer geeigneten Applikations-Soft- und/oder Hardware für den mindestens einen Teilnehmer (3) des Netzsystems zum Erstellen und Speichern der individualisierten Information aus der Gesamtheit von Informationen;
b. Übertragen der Gesamtheit von Informationen mittels eines Broadcastsystems (2) von der zentralen Einheit (1) des Netzsystems an den mindestens einen Teilnehmer (3) des Netzsystems und/oder
c. Übertragen der individualisierten Information mittels eines Mobilkommunikationssystems (6) von der zentralen Einheit (1) des Netzsystems an den mindestens einen Teilnehmer (3) des Netzsystems.

## Beschreibung

Die vorliegende Erfindung betrifft ein kombiniertes Netzsystem zur Bereitstellung individualisierter Information aus einer Gesamtheit von Informationen für mindestens einen Teilnehmer des Netzsystems durch eine zentrale Einheit des Netzsystems und ein entsprechendes Verfahren.

Bei der stetig anwachsenden Informationsflut, sei es auf schriftlichem Weg, beispielsweise in Form von Zeitungen oder Magazinen oder über andere Medien, wie beispielsweise Fernsehen, Radio oder Internet, ist es für den einzelnen Nutzer der entsprechenden Medien sehr schwierig einen Überblick über all diese Informationen zu bekommen. Aufgrund der Fülle an Information, die sich über die verschiedensten Bereiche erstreckt, ist er nicht in der Lage, schnell und einfach, die für ihn wesentliche und interessante Information herauszufiltern. Bevor der Nutzer zu dem gelangt, was er sucht, muss er viele für ihn unwichtige Information durchforsten. Zum einen kostet das viel Zeit, die für ihn uneffektiv ist, zum zweiten nimmt es dem Nutzer womöglich auch die Freude am steten Informiertsein.

Daher war es eine Aufgabe der Erfindung, ein Netzsystem bereitzustellen, mit dem es möglich ist, einem Teilnehmer des Netzsystems individualisierte Information aus einer Gesamtheit von Informationen bereitzustellen, d.h. einem Teilnehmer nur die von ihm gewählte und ihn interessierende Information zu liefern, um somit einer Informationsüberflutung entgegenzuwirken bzw. vorzubeugen und gleichzeitig dem Teilnehmer des Netzsystems eine Interaktion zu gewähren.

Gelöst wird diese Aufgabe durch das erfindungsgemäße Netzsystem gemäß Anspruch 1. Weitere vorteilhafte Ausführungsformen des Netzsystems sind in den entsprechenden Unteransprüchen angegeben.

Gemäß Anspruch 1 wird ein kombiniertes Netzsystem zur Bereitstellung individualisierter Information aus einer Gesamtheit von Informationen für mindestens einen Teilnehmer des Netzsystems durch eine zentrale Einheit des Netzsystems bereitgestellt, wobei das Netzsystem mindestens ein Broadcastsystem zur Übertragung der Gesamtheit von Informationen und mindestens ein Mobilkommunikationssystem zur Übertragung individualisierter Information an den mindestens einen Teilnehmer und zur Interaktion des mindestens einen Teilnehmers des Netzsystems mit der zentralen Einheit des Netzsystems aufweist.

Ein kombiniertes Netz ist bereits im Bereich der Fernsehtechnik bekannt. In der Zeitschrift Funkschau, Ausgabe 11/2000, S.28-31 wird in einem Artikel mit dem Titel "Hybridnetze DVB-T und GPRS" beschrieben, dass der Kanal, der zum Fernsehzuschauer als dem Teilnehmer des Netzes läuft, d.h. der sogenannte "Hinkanal" über einen digitalen terrestrischen Fernsehkanal (DVB-T) als Broadcast läuft. In dieser Weise werden also die digitalen Fernsehprogramme übermittelt. Für den Rückkanal, d.h. für den Kanal, der eine Verbindung vom Fernsehzuschauer zur Fernsehanstalt herstellen soll, wird der GPRS (General Packet Radio Service) verwendet. Neben den Fernsehprogrammen ist die Ausstrahlung eines HTML-basierten Datenkanal (Hypertext Markup Language) geplant. Über den Rückkanal kann dann ein Fernsehzuschauer auf Daten, die im Hinkanal (DVB-T-Hinkanal) gebroadcastet werden, zugreifen oder auswählen.

Im Gegensatz dazu ist es bei dem erfindungsgemäßen Netzsystem möglich, auch die individualisierte Information aus der Gesamtheit von Informationen mittels eines Mobilkommunikationssystems von einer zentralen Einheit des Netzsystems zu dem entsprechenden Teilnehmer des Netzsystems zu übertragen, d.h. bereits der "Hinkanal" kann hier über ein Mobilkommunikationsnetz laufen. Je nach der von dem Teilnehmer des Netzsystems getroffenen Auswahl und dem gewünschten Detailgrad der Darstellung der bereitzustellenden individualisierten Information kann die Individualisierung der Information in der zentralen Einheit des Netzsystems als Service laufen. Somit wird nur die bereits ausgefilterte und aufbereitete Information aus der Gesamtheit von Informationen zu einem Anzeigegerät des Teilnehmers des Netzsystems geladen. Da es sich dabei im Allgemeinen um eine vergleichsweise geringe Datenmenge handelt, die es zu übertragen gilt, ist dies erfindungsgemäß mittels eines Mobilkommunikationssystems möglich. Ändert der Teilnehmer des Netzsystems seine Wünsche bezüglich der individualisierten Information, die ihm bereitgestellt werden soll, d.h. ändert er sein Teilnehmerprofil, so muss dies der zentralen Einheit des Netzsystems jeweils mitgeteilt werden. Diese Mitteilung seitens des Teilnehmers des Netzsystems erfolgt erfindungsgemäß ebenfalls über ein Mobilkommunikationssystem. Jegliche Interaktion des Teilnehmers des Netzsystems mit der zentralen Einheit des Netzsystems erfolgt erfindungsgemäß über ein Mobilkommunikationssystem.

Eine Individualisierung der Information aus einer Gesamtheit von Informationen kann auf verschiedene Art und Weise erfolgen. Zum einen kann von dem Teilnehmer des Netzes eine inhaltliche Individualisierung vorgenommen werden, d.h. er kann die Auswahl nach Themengebieten treffen, wie beispielsweise Sport, Wirtschaft, Börse, Kultur, Feuilleton, Klatsch oder Anzeigen. Denkbar ist es auch diese Auswahl nach Themengebieten noch weiter zu präzisieren, beispielsweise gezielt nur Informationen zum Neuen Markt Frankfurt, nur Formel 1 spezifische Informationen oder nur Kommunikationstechnik-Wirtschaftsinformationen auszuwählen. Ferner ist es dem Teilnehmer des Netzes erfindungsgemäß möglich, die Darstellungsform der von ihm ausgewählten Informationen zu bestimmen bzw. wie detailliert eine Information übermittelt werden soll. Er kann sich dafür entscheiden, nur Überschriften oder nur Überschriften mit dem 1. Absatz oder vollständige Artikel übermittelt zu bekommen.
Falls ein Teilnehmer des Netzes beispielsweise nur Überschriften aus den von ihm ausgewählten Themengebieten als Darstellungsform gewünscht hat, so ist es erfindungsgemäß durch Interaktion des Teilnehmers des Netzsystems mit der zentralen Einheit des Netzsystems möglich den vollständigen Artikel auf Wunsch nachzuliefern. Der Teilnehmer ist dadurch von einer unnötigen Informationsflut bewahrt. Er kann sich über die ihn interessierenden Themen anhand von Überschriften oder Abstracts einen sehr schnellen Überblick verschaffen und gegebenenfalls, ganz nach seinem Wunsch, das ein oder andere Thema vertiefen, indem er den vollständigen Artikel nachfordert. Für den Teilnehmer ist das mit einem großen Zeitgewinn verbunden. Zudem ist er in der Lage, sich wirklich ausschließlich auf das zu konzentrieren, was er für sich für relevant hält.

Vorzugsweise findet die Bereitstellung von individualisierter Information aus der Gesamtheit von Informationen für eine festlegbare Auswahl an Teilnehmern des Netzes statt. Das bedeutet, dass jeder Teilnehmer des Netzsystems, der eine Bereitstellung individualisierter Information aus einer Gesamtheit von Informationen für sich in Anspruch nehmen will, sich für diesen Dienst anmelden muss, d.h. er muss entsprechend "subskribiert" sein für diesen Dienst. Sodann erhält er Zugang zu der Gesamtheit von Informationen und eine geeignete Applikations-Soft- und/oder Hardware, die kompatibel ist mit seinem entsprechenden Endgerät, beispielsweise mit seinem Mobilfunkgerät, seinem Laptop oder seinem SIMPAD und mittels derer er Informationen aus der Gesamtheit von Informationen individuell auswählen, speichern und gegebenenfalls anzeigen und/oder ausdrucken lassen kann. Diese bevorzugte Ausführungsform des Netzsystems gibt der zentralen Einheit im Netzsystem, d.h. beispielsweise einem Service Provider, der die Gesamtheit von Informationen von verschiedenen Verlagen, Agenturen und Publizisten sammelt und gegebenenfalls aufkauft, zum einen die Möglichkeit auf diese Weise seine entstehenden Kosten gezielt auf die für diesen Dienst angemeldeten bzw. registrierten Teilnehmer des Netzes umzuverteilen bzw. darüber hinaus gezielt Gebühren für die Bereitstellung dieses Dienstes zu erheben. Ferner ist die Bereitstellung eines derartigen Dienstes für den Service Provider ein gutes Werbemittel, was ihn von der Konkurrenz abhebt.

In einer bevorzugten Ausführungsform funktioniert das Broadcastsystem zur Übertragung der Gesamtheit von Informationen auf der Basis von Satellitenfernsehkanälen (DCB-S) und/oder von terrestrischen digitalen Fernsehkanälen (DVB-T). Denkbar ist auch die Nutzung von DAB (Digital Broadcast Radio). Mittels dieser Broadcastübertragung ist eine verhältnismäßig schnelle und qualitativ gute Übertragung einer großen Datenmenge, d.h. der Gesamtheit von Informationen, möglich. Die somit rundgesendete Gesamtheit von Informationen ist beispielsweise dem entsprechenden Teilnehmer des Netzsystems unmittelbar zugänglich, so dass dieser dann vor Ort die Individualisierung der von ihm gewünschten Information vornehmen kann. Erfindungsmäßig kann die gewünschte Individualisierung auch in der erfindungsgemäß vorgesehenen zentralen Einheit des Netzsystems erfolgen, wo die vorzunehmende Individualisierung des entsprechenden Teilnehmers des Netzsystems hinterlegt ist. Die sodann individualisierte Information wird dann erfindungsgemäß mittels eines Mobilkommunikationssystems von der zentralen Einheit des Netzsystems zu dem entsprechenden Teilnehmer übertragen.

In einer bevorzugten Ausführungsform wird das Mobilkommunikationssystem durch ein UMTS (Universal Mobile Telecommunications System) oder ein anderes Mobilkommunikationssystem der 3. Generation und/oder durch einen GSM/GPRS/EDGE oder ein anderes Mobilkommunikationssystem der 2. Generation realisiert.

Durch die Möglichkeit der Interaktion zwischen der zentralen Einheit des Netzsystems und einem entsprechend registrierten Teilnehmer mittels eines Mobilkommunikationssystems ist es dem Teilnehmer auch unterwegs d.h. beispielsweise mittels eines Mobilfunkgerätes, sehr einfach möglich, schnell und gezielt bestimmte von ihm gewünschte Informationen nachzufordern. Ermittelt er beispielsweise beim Durchlesen seiner individualisierten Information eine interessante Veranstaltung, so kann er zum einen spontan nähere Information darüber anfordern und zum zweiten spontan Tickets dafür reservieren. Dasselbe ist denkbar bei einem Reiseangebot o.ä.

Ferner war es eine weitere Aufgabe der vorliegenden Erfindung ein Verfahren zur Bereitstellung individualisierter Information aus einer Gesamtheit von Informationen für mindestens einen Teilnehmer eines Netzsystems durch eine zentrale Einheit des Netzsystems bereitzustellen, wobei das Verfahren mindestens die folgenden Schritte aufweist:
a. Bereitstellen einer geeigneten Applikations-Soft- und/oder Hardware für den mindestens einen Teilnehmer des Netzsystems zum Erstellen und Speichern der individualisierten Information aus der Gesamtheit von Informationen;
b. Übertragen der Gesamtheit von Informationen mittels eines Broadcastsystems von der zentralen Einheit des Netzsystems an den mindestens einen Teilnehmer des Netzsystems und/oder
c. Übertragen der individualisierten Information mittels eines Mobilkommunikationssystems von der zentralen Einheit des Netzsystems an den mindestens einen Teilnehmer des Netzsystems.

Vorzugsweise erfolgt dabei das Übertragen der Gesamtheit von Informationen in Schritt b. über einen Satellitenfernsehkanal (DVB-S) und/oder über einen terrestrischen digitalen Fernsehkanal (DVB-T). Denkbar ist auch die Nutzung von DAB (Digital Audio Radio).

Über die geeignete Applikations-Soft- und/oder Hardware wird dem mindestens einen Teilnehmer des Netzes erfindungsgemäß ermöglicht, individuell Informationen aus der Gesamtheit von Informationen auszuwählen und abzuspeichern, vorzugsweise auch auf einem geeigneten Drucker auszudrucken. Die Auswahl von Informationen aus der Gesamtheit von Informationen kann dabei von dem Teilnehmer jederzeit, auch recht dynamisch, geändert werden. Das erfindungsgemäße Verfahren ermöglicht es zum einen, dem Teilnehmer des Netzsystems zunächst die Gesamtheit von Informationen mittels eines Broadcastsystems von der zentralen Einheit des Netzsystems zu übertragen, d.h. zur Verfügung zu stellen. Die Individualisierung der Information aus der Gesamtheit von Informationen erfolgt dann vor Ort bei dem Teilnehmer selbst. Ferner eröffnet das erfindungsgemäße Verfahren aber auch die Möglichkeit, dass die Individualisierung der Information aus der Gesamtheit von Informationen bereits in der zentralen Einheit des Netzsystems vorgenommen wird und nur die bereits individualisierte Information mittels eines Mobilkommunikationssystems von der zentralen Einheit des Netzsystems an den entsprechenden Teilnehmer des Netzsystems übertragen wird. In letzterem Fall muss bei der zentralen Einheit des Netzsystems hinterlegt sein, wie die von dem Teilnehmer gewünschte Individualisierung auszusehen hat, d.h. es muss eine Art Teilnehmerprofil vorliegen. Erfindungsgemäß soll es dem Teilnehmer des Netzsystems jederzeit möglich sein, sein Teilnehmerprofil zu ändern.

In einer bevorzugten Ausführungsform des Verfahrens weist das Verfahren mindestens die folgenden weiteren Schritte aufweist:
d. Anfordern von zusätzlicher Information aus der Gesamtheit von Informationen von dem mindestens einen Teilnehmer bei der zentralen Einheit des Netzsystems mittels eines Mobilkommunikationssystems;
e. Nachliefern der zusätzlichen Information aus der Gesamtheit von Informationen an den mindestens einen Teilnehmer des Netzsystems durch die zentrale Einheit des Netzsystems mittels eines Mobilkommunikationssystems.

Somit ist es dem Teilnehmer des Netzsystems spontan möglich, Themen, die ihn interessieren, durch Anforderung weiterer Informationen zu vertiefen. Er erhält so gezielt mehr Details bezüglich eines Themas, läuft aber nicht Gefahr bereits von Anfang an zuviel und darunter auch unnötige, ihn nicht interessierende Informationen zu erhalten. Es wird ein Maximum an individualisierter Information erreicht.

In einer weiteren bevorzugten Ausführungsform des Verfahrens wird das Mobilkommunikationsnetz durch ein GPRS und/oder ein UMTS realisiert.

Weitere Vorteile der Erfindung werden anhand der folgenden Figur erläutert. Es zeigt:

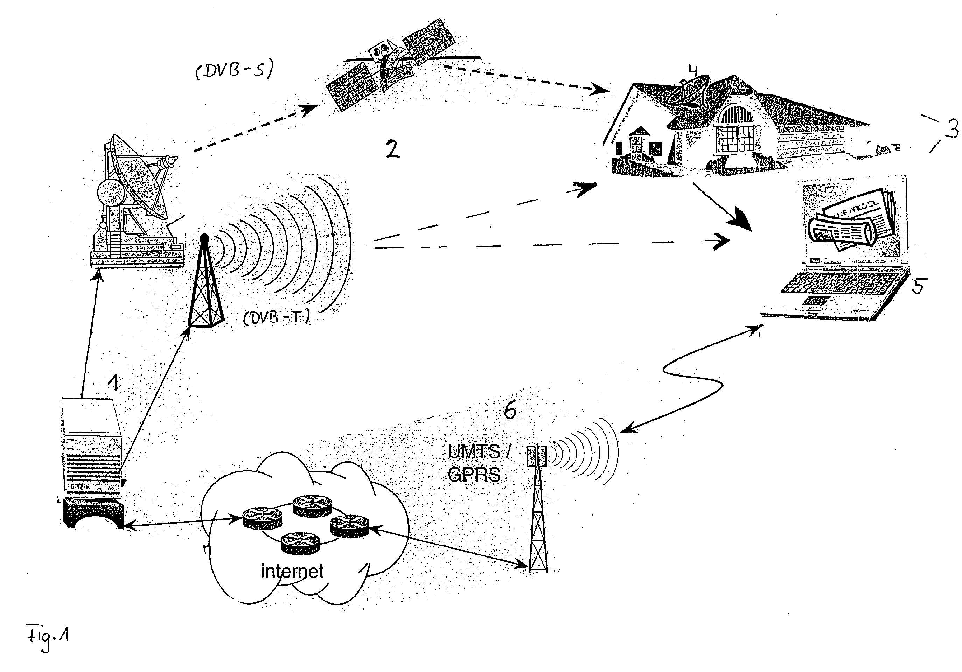

Fig. 1 Schematische Darstellung einer Ausführungsform eines erfindungsgemäßen Netzsystems

In Figur 1 ist eine Ausführungsform eines erfindungsgemäßen Netzsystems dargestellt. Eine zentrale Einheit 1, beispielsweise ein Service Provider, sammelt Informationen von verschiedenen Agenturen, Verlegern und anderen Anbietern und stellt somit eine Gesamtheit von Informationen bereit. Ferner weist das erfindungsgemäße Netzsystem ein Broadcastsystem 2 auf. Dies ist vorzugsweise auf Basis von Satellitenfernsehkanälen (DVB-S) oder auf Basis von terrestrischen digitalen Fernsehkanälen (DVB-T) realisiert. Mittels des Broadcastsystems 2 ist es nun möglich, die Gesamtheit von Informationen rundzusenden. Im Falle des Einsatzes von Satellitenfernsehantennen wird die Gesamtheit von Informationen dabei vorzugsweise über einen fest installierten Satellitenempfang 4, beispielsweise über eine auf einem Hausdach angeordnete Satellitenschüssel, empfangen und danach eventuell auf ein mobiles Endgerät 5, wie beispielsweise ein Laptop, ein Mobilfunkgerät oder ein SIMPAD transferiert. Bei Einsatz von terrestrischen digitalen Fernsehkanälen ist eine unmittelbare Übertragung auf mobile Kommunikationsendgeräte 5 denkbar. Der Teilnehmer 3 des Netzsystems, der vorzugswei se bei der zentralen Einheit 1 des Netzsystems für diesen Dienst registriert ist, kann nun mittels einer erfindungsgemäß vorgesehenen geeigneten Applikations-Soft-und/oder Hardware an seinem Endgerät bestimmen, welche Information und in welcher Darstellungsform er Information aus der Gesamtheit von Informa tionen erhalten möchte, d.h. er kann nun eigenständig die ihm zugänglich gemacht gewordene Gesamtheit von Informationen individualisieren bzw. personalisieren. Er kann eine exakte Auswah] treffen hinsichtlich der Themen, die ihn interessieren und er kann darüber hinaus den Detailgrad bestimmen, in welchem ihm die von ihm ausgewählte Information zukommen soll. Das bedeutet, dass er sich beispielsweise nur Überschriften, Überschriften mit Leitsatz oder gesamte Artikel zusenden lassen kann. Je nach Auswahl und Detailgrad der Darstellung kann die Individualisierung der Information natürlich auch zentral als Service in der zentralen Einheit 1 des Netzsystems vorgenommen werden, so dass nur die bereits individualisierte Information und nicht die Gesamtheit von Informationen an den Teilnehmer 3 übertragen wird. Diese Übertragung erfolgt dabei vorzugsweise mittels eines erfindungsgemäß vorgesehenen Mobilkommunikationssystems 6, das gleichzeitig zu dem Broadcastsystem 2 in dem erfindungsgemäßen Netzsystem integriert ist. Vorzugsweise wird das Mobilkommunikationssystem 6 durch ein UMTS (Universal Mobile Telecommunications System) und/oder durch ein GPRS (General Packet Radio Service) realisiert. Das immer wieder aktualisierbare Profil des Teilnehmers 3, d.h. seine immerwährende Möglichkeit seine Individualiserung zu ändern, wird der zentralen Einheit 1 jeweils mitgeteilt. Das Mobilkommunikationssystem 6 ermöglicht somit eine unmittelbare Interaktion zwischen dem entsprechenden Teilnehmer 3 und der zentralen Einheit 1 des erfindungsgemäßen Netzsystems. Darüber hinaus ist es auch möglich, dass der Teilnehmer 3 sich einen Artikel beispielsweise ganz nachsenden lässt, den er zuvor nur als Auszug vorliegen hatte. Es wird somit ein Maximum an Flexibilität von Informationsübertragung geschaffen, zumal dies auch unterwegs, d.h. mobil möglich ist. Der Teilnehmer 3 kann sich ohne Probleme von unterwegs aus, zu einen seine von ihm individualisierte Information ansehen, diese dann nochmals revidieren und gegebenenfalls sich Zusatzinformation innerhalb kurzer Zeit übertragen lassen. Hat er beispielsweise eine Veranstaltung entdeckt, für die er Karten erlangen möchte, so kann er auch dies online vornehmen.

## Patentansprüche

1. Kombiniertes Netzsystem zur Bereitstellung individualisierter Information aus einer Gesamtheit von Informationen für mindestens einen Teilnehmer (3) des Netzsystems durch eine zentrale Einheit (1) des Netzsystems, wobei das Netzsystem mindestens ein Broadcastsystem (2) zur Übertragung der Gesamtheit von Informationen und mindestens ein Mobilkommunikationssystem (6) zur Übertragung individualisierter Information an den mindestens einen Teilnehmer (3) und zur Interaktion des mindestens einen Teilnehmers (3) des Netzsystems mit der zentralen Einheit (1) des Netzsystems aufweist.

2. Kombiniertes Netzsystem nach Anspruch 1,
**dadurch gekennzeichnet,**
**dass** das Broadcastsystem (2) auf Basis von Satellitenfernsehkanälen (DVB-S) und/oder von terrestrischen digitalen Fernsehkanälen (DVB-T) funktioniert.

3. Kombiniertes Netzsystem nach Anspruch 1 oder 2,
**dadurch gekennzeichnet,**
**dass** das Mobilkommunikationssystem (6) durch ein UMTS (Universal Mobile Telecommunications System) und/oder durch ein GPRS (General Packet Radio Service) realisiert ist.

4. Verfahren zur Bereitstellung individualisierter Information aus einer Gesamtheit von Informationen für mindestens einen Teilnehmer (3) eines Netzsystems durch eine zentrale Einheit (1) des Netzsystems, wobei das Verfahren mindestens die folgenden Schritte aufweist:
a. Bereitstellen einer geeigneten Applikations-Soft- und/oder Hardware für den mindestens einen Teilnehmer (3) des Netzsystems zum Erstellen und Speichern der individualisierten Information aus der Gesamtheit von Informationen;
b. Übertragen der Gesamtheit von Informationen mittels eines Broadcastsystems (2) von der zentralen Einheit (1) des Netzsystems an den mindestens einen Teilnehmer (3) des Netzsystems und/oder
c. Übertragen der individualisierten Information mittels eines Mobilkommunikationssystems (6) von der zentralen Einheit (1) des Netzsystems an den mindestens einen Teilnehmer (3) des Netzsystems.

5. Verfahren nach Anspruch 4,
**dadurch gekennzeichnet,**
**dass** das Übertragen der Gesamtheit von Informationen in Schritt b. über einen Satellitenfernsehkanal (DVB-S) und/oder über einen terrestrischen digitalen Fernsehkanal (DVB-T) erfolgt.

6. Verfahren nach Anspruch 4 oder 5,
**dadurch gekennzeichnet,**
**dass** das Verfahren mindestens die folgenden weiteren Schritte aufweist:
d. Anfordern von zusätzlicher Information aus der Gesamtheit von Informationen von dem mindestens einen Teilnehmer (3) bei der zentralen Einheit (1) des Netzsystems mittels eines Mobilkommunikationssystems (6) ;
e. Nachliefern der zusätzlichen Information aus der Gesamtheit von Informationen an den mindestens einen Teilnehmer (3) des Netzsystems durch die zentrale Einheit (1) des Netzsystems mittels eines Mobilkommunikationssystems (6).

7. Verfahren nach einem der Ansprüche 4 bis 6,
**dadurch gekennzeichnet,**
**dass** das Mobilkommunikationsnetz (6) durch ein GPRS und/oder ein UMTS realisiert ist.
